Europäisches Patentamt

European Patent Office

Office européen des brevets

(19)

(11) **EP 0 395 112 B1**

(12) **EUROPEAN PATENT SPECIFICATION**

(45) Date of publication and mention
of the grant of the patent:
**27.10.1999 Bulletin 1999/43**

(51) Int Cl.[6]: **G06F 15/80**

(21) Application number: **90108123.2**

(22) Date of filing: **27.04.1990**

(54) **Neural network**

Neuronales Netzwerk

Réseau neuronal

(84) Designated Contracting States:
**DE FR GB**

(30) Priority: **28.04.1989 JP 11130789**

(43) Date of publication of application:
**31.10.1990 Bulletin 1990/44**

(73) Proprietor: **VICTOR COMPANY OF JAPAN,
LIMITED
Yokohama-Shi Kanagawa-Ken 221 (JP)**

(72) Inventor: **Takami, Junichi,
4-506, Takanoharaekinishidanchi
Souraku-gun, Kyoto-fu (JP)**

(74) Representative: **Grünecker, Kinkeldey,
Stockmair & Schwanhäusser Anwaltssozietät
Maximilianstrasse 58
80538 München (DE)**

(56) References cited:
- **IEEE FIRST INTERNATIONAL CONFERENCE ON NEURAL NETWORKS, San Diego, California, 21st - 24th June 1987, pages II-89 - II-96; R.M. KUCZEWSKI et al.: "Exploration of backward error propagation as a self-organizational structure"**
- **SIGNAL PROCESSING IV: THEORIES AND APPLICATIONS PROCEEDINGS OF EUSIPCO-88, FOURTH EUROPEAN SIGNAL PROCESSING CONFERENCE, Grenoble, 5th - 8th September 1988, pages 939-942; S. JHA et al.: "Investigation into neural networks for bearing estimation"**
- **ELECTRONICS LETTERS, vol. 23, no. 18, 27th August 1987, pages 958-959; Y.P. TSIVIDIS et al.: "Switched-capacitor neural networks"**

EP 0 395 112 B1

**Description**

BACKGROUND OF THE INVENTION

The present invention relates to a neural network according to the preamble part of claim 1. Such a neural network is known from Signal Processing IV: Theories and Applications Proceedings of EUSIPCO-88 Fourth European Signal Processing Conference, Grenoble 5th-8th September 1988, pages 939-942; S. JHA et al.: Investigation into neural networks for bearing estimation" Pages 939, column 2, lines 28-33; page 940, column 1, lines 18-51.

This reference deals with the problem that a neural network which is required to converge to the global minimum from a random starting state may undesirably converge to the local minima of the energy function. In order to avoid this problem, the paper proposes that the gain of the sigmoid transfer function of the neurones should initially be low and should then be increased at successive iterations to use better congruence to the global minimum.

Under Item 2.2, the paper mentions that falling into local minima may be avoided by use of low gain values for the sigmoid transfer function. However, if the gain is low, this results in the undesirable effect that the network takes a long time to converge. On the other hand, if the gain is too high the network risks getting trapped into one of the local minima. Consequently, the paper suggests to start with a relatively low gain and then to steadily increase the gain at successive iterations.

Extensive studies and developments are now under way for imitating the neurons or the brain of a human being and implementing the application thereof to engineering. A neural network has been reported in various forms as an engineering model of a neural circuit network. For example, a pattern-associative neural network is a layered neural network having an input layer, an intermediate layer and an output layer which are constituted by a great number of units (neurons). Each unit constitutes a transform system having a non-linear input-to-output characteristic and engineeringly modeling the neurons of a brain, while the neural network is the assembly of numerous units which are connected together by variable weights. In the connection of units in the neural network, each unit plays the role of a transform system having a non-linear input-to-output characteristic, e. g., a non-linear function F (X) which produces a value Y = (X) in response to an input value X. The input value is the product of the output values of the preceding layer (or input values to the network) and independent variable weights, and it is delivered to the following layer after being subjected to non-linear transform. The variable weight refers to the intensity of connection of the units and is varied and converged, or learned, to construct a desired neural network. Algorithms available for the construction of a neural network include back propagation, while non-linear functions known in the art include a sigmoid function.

In the pattern-associative neural network, when an input pattern is applied to an input layer, it is propagated through the input layer, intermediate layer and output layer in this sequence while being processed, resulting in an output value (output pattern) being fed out from the output pattern. The output value is derived from the weights having been obtained by learning. When the output value is the desired one (right answer), it is propagated backward through the output layer, intermediate layer and input layer in this order, whereby the weights are learned. "To learn weights" means varying and converging the intensities of connection of the units, i. e., weights in such a manner as to reduce the difference between the actual output value and the desired output value.

Various studies have been conducted for constructing a layered neural network which uses back propagation and has high performance, i. e. a high ratio of right answers. For example, a neural network using a variable c called a bias coefficient has been reported. Specifically, this kind of neural network enhances efficient learning by increasing or decreasing the input values to a unit, i. e., the output values of the preceding layer (or the inputs to the network) by independent variable weights, summing up the resultant products, and applying a variable $\alpha$ to the sum for increasing or decreasing it. Assuming that the sigmoid function is used as the non-linear function, the sigmoid function is sequentially shifted in parallel by $\alpha$ along the abscissa (or input axis). Based on learning, the bias coefficient $\alpha$ itself is varied and converged to optimize the input-to-output characteristic of each unit at the successive stages of learning, so that the neural network may be constructed by a small number of times of learning.

A problem with the bias coefficient c scheme stated above is that the performance of the neural network is not sufficient to practically implement speech recognition or image recognition. Furthermore, such a network needs a prohibitive number of times of learning and, therefore, cannot achieve efficient learning.

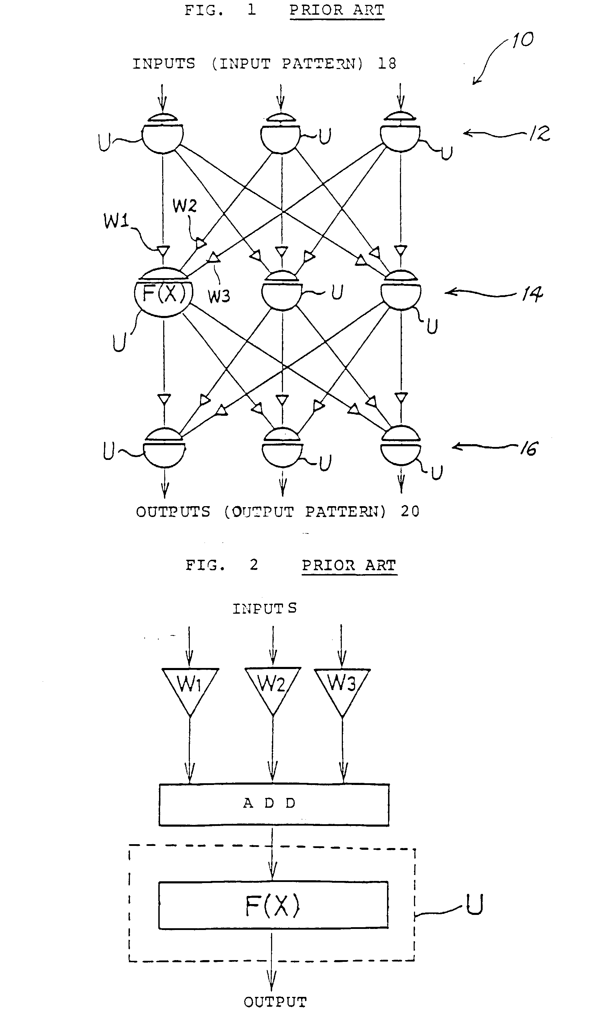

From Electronics Letters, vol. 23, no. 18, August 27, 1987, pages 958-959; Y.P. TSIVIDIS et al. : "Switched-capacitcr neural networks", a switch-capacitor neural network is known. In connection with equation 1, a relationship of the output of the ith neurone at a discrete time instant mT, the eights W and the non-linear functicn f commonly of sigmoid shape is suggested. Figure 1 shows the neurone non-linearity, and the effect of multiplying argument by beta.

It is therefore an object of the present invention to provide a neural network which eliminates the drawbacks particular to the prior art as discussed above.

This object is solved by the subject matter of claim 1.

BRIEF DESCRIPTION OF THE DRAWINGS

The above and other objects, features and advantages of the present invention will become more apparent from the following detailed description taken with the accompanying drawings in which:

Fig. 1 is a schematic view showing a prior art pattern-associative neural network;

Fig. 2 is a block diagram schematically showing inputs and an output of a unit included in the neural network of Fig. 1;

Fig. 3 is a graph representative of a general input-to-output characteristic of a unit;

Fig. 4 is a block diagram schematically showing a relationship between the inputs and the output of a prior art unit to which a bias coefficient is applied;

Figs. 5 and 6 are schematic block diagrams showing a preferred embodiment of the neural network in accordance with the present invention, particularly a relationship between the inputs and the output of a unit;

Fig. 7 is a graph demonstrating the input-to-output characteristic of a unit which varies with a gain coefficient;

Fig. 8 is a view schematically showing a neural network which is a first example of the illustrative embodiment;

Fig. 9 is a table listing themes constructed by the first example;

Figs. 10A to 10D are charts demonstrating how the neural network of the first example is constructed;

Figs. 11A and 11B are charts showing a comparative example in relation to the first example;

Fig. 12 is a a chart representative of a second example of the illustrative embodiment; and

Fig. 13 is a chart showing a comparative example in relation to the second example.

DESCRIPTION OF THE PREFERRED EMBODIMENT

To better understand the present invention, a brief reference will be made to a prior neural network.

Fig. 1 shows a prior art pattern-associative neural network 10 having a great number of numerous units or neurons U which are distributed in an input layer 12, an intermediate layer 14, and an output layer 16 by way of example. In such a layered neural network 10, the neurons U each serves as a transform system having a non-linear input-to-output characteristic and engineeringly modeling the neurons of a brain. The units U are connected together by variable weights W.

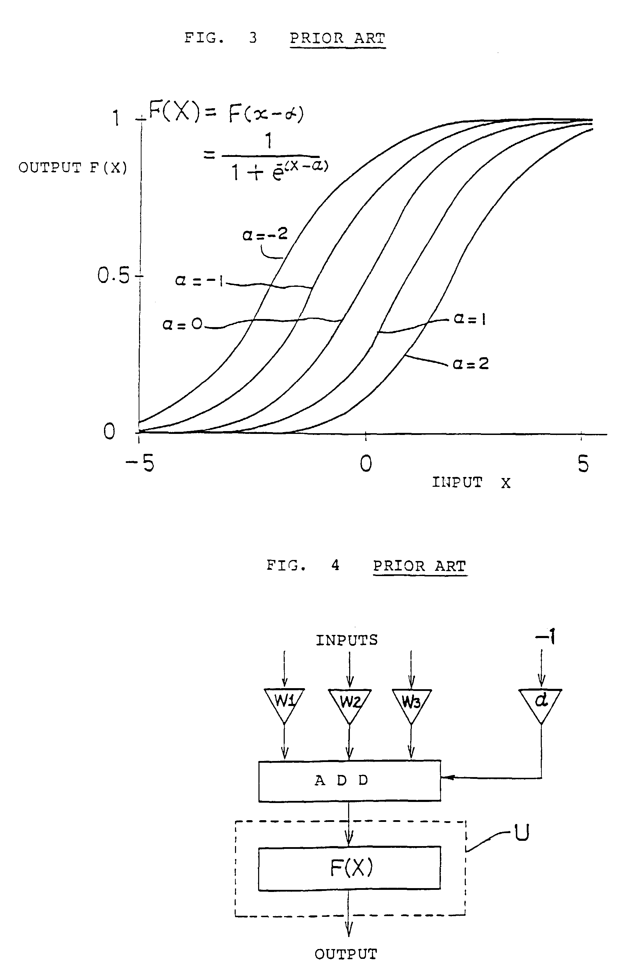

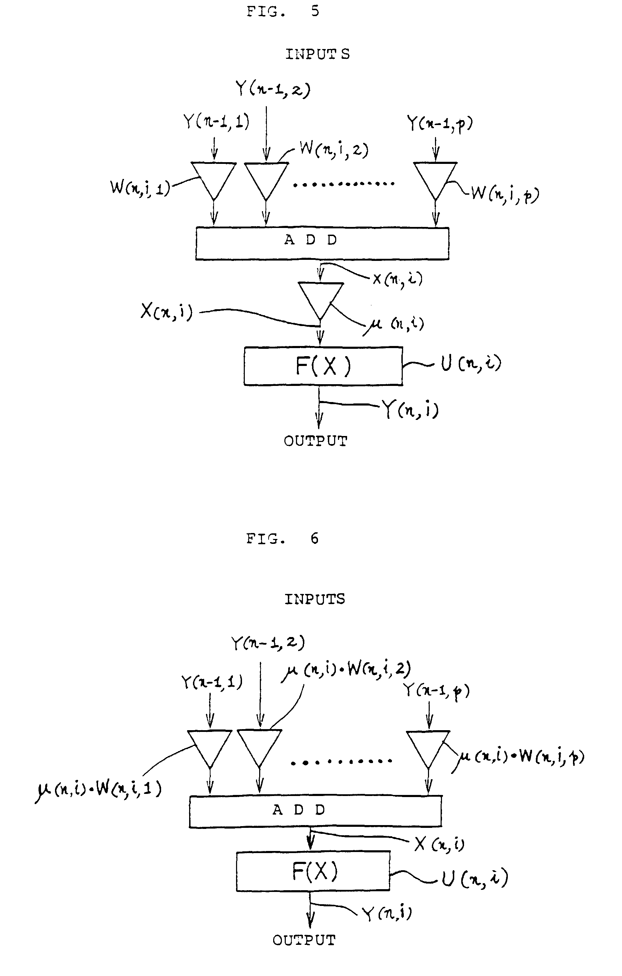

Fig. 2 demonstrates the connection of each unit U of the neural network 10 schematically. As shown, each unit U constitutes a transform system having a non-linear input-to-output characteristic which may be implemented by a non-linear function F(X) that produces an output value Y = F(X) in response to an input value X. The output values of the immediately preceding layer (or the input values to the network) each is multiplied by an individual variable weight W, and the resultant products are summed up. The unit U non-linearly transforms the sum of the products and delivers the result to the immediately following layer. The weight W of the neural network 10 is representative of the intensity of connection of associated units U. The neural network 10 is constructed with the weights being sequentially varied and converged, i. e. , learned. Learning algorithms available for the construction of a neural network include back propagation, as stated earlier. Concerning the non-linear function of the unit U, use may be made of a sigmoid function, as shown in Fig. 3.

In the neural network 10 shown in Fig. 1, an input pattern 18 applied to the input layer 12 is propagated through the input layer 12, intermediate layer 14 and output layer 16 in this order while being processed by the latter. As a result, an output pattern 20 is produced from the output layer 16. The values of the output pattern 20 are derived from the weights determined by consecutive learning. If the output values are desired ones (right answer), they are propagated backward from the output layer 16 to the input layer 12 via the intermediate layer 14 to allow the units U to learn the weights. The term "to learn the weights" refers to varying and converging the intensities of connection of the units U, i. e. , the weights in such a manner as to reduce the difference between the actual output values and the desired output values.

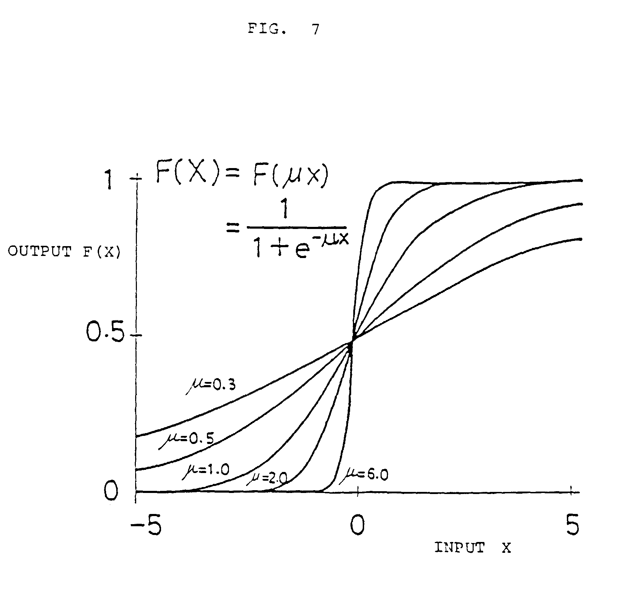

Concerning the prior art layered neural network 10 implemented by back propagation as stated above, efforts have been made to construct a high performance neural network capable of producing right answers in a high ratio. One of them uses a variable α which is generally referred to as a bias coefficient Specifically, as shown in Fig. 4, the variable α scheme is such that the input values to the unit U or to the network are multiplied by individual variable weights W, the resultant products are summed up, and a variable α is introduced in the summing stage to increase or decrease the sum, thereby improving the learning efficiency. Assuming that the non-linear function is implemented by the sigmoid function mentioned earlier, then the sigmoid function is shifted by α in parallel along the abscissa (input axis) as the bias coefficient α varies, as shown in Fig. 3. The bias coefficient α itself is varied and converged by learning so as to optimize the input/output characteristics of the individual units U at the consecutive stages of learning. Such a scheme has been directed toward constructing a neural network by a small number of times of learning.

However, the performance available with the neural network using a bias coefficient α as discussed above is not satisfactory for practical applications such as speech recognition and image recognition. Moreover, this kind of network needs a great number of times of learning, resulting in poor learning efficiency.

Hereinafter will be described a preferred embodiment of the neural network in accordance with the present invention. The illustrative embodiment is basically implemented as a layered neural network using back propagation as its learning algorithm which has been described with reference to Fig. 1.

The illustrative embodiment is constructed as a neural network having N layers. Figs. 5 and 6 are views similar to Figs. 2 and 4, respectively, and indicative of the connection of the i-th unit U (n, i) among g units constituting the n-th layer of the N layers. As shown, the output values Y (n-1, j) of the individual j-th units (j = 1, 2, ·····, and p) of the preceding (n-1)-th layer are multiplied by associated weights W (n, i, j) which are representative of the intensities of connection of the j-th units of the (n-1)-th layer and the i-th unit of the n-th layer, and the resultant products are summed up to apply an input value x (n, i) to the i-th unit of the n-th layer. The input value x(n, i) is multiplied by a multiplier of a gain coefficient $\mu$ (n, i), and the resulted product X (n, i) is fed to a non-linear function generator F (X). The gain coefficient $\mu$ (n, i) plays the role of means for collectively controlling the individual weights W (n, i, j) intervening between the units, as will be seen from Fig. 6 which is equivalent to Fig. 5, i. e., $\sum_j \{\mu (n, i) \cdot Y (n-1, j)\} = \mu (n, i) \cdot \sum_j Y (n-1, j)$. In the illustrative embodiment, the input values to the i-th unit of the n-th layer, i. e., the gain coefficient $\mu$ (n, i) is used to collectively control the input values to the i-th unit of the n-th layer, i. e., the weights representative of the intensities of connection of the individual units of the (n-1)-th layer and the i-th unit of the n-th layer, as shown and described. However, the range of collective control executed by the gain coefficient $\mu$ (n, i) should not be limited to such a specific range.

The input value X (n, j) which is the product of x (n, j) and the gain coefficient $\mu(n,i)$ is non-linearly transformed by the non-linear function generator F (X), as follows:

$$Y (n, i) = F\{X(n,i)\}$$

The transformed value Y(n, i) is fed to the units of the next layer.

The gain coefficient $\mu(n,i)$ is learned together with the weights W (n, i, j) to construct the neural network, as described in detail later.

The gain coefficient $\mu(n, i)$ is expressed as:

$$Y (n, i) = F \{X (n, i)\} = F \{\mu(n, i) \cdot x(n, i)\}$$

Hence, assuming that the sigmoid function is used as the non-linear function, it is produced by:

$$F (X) = F (\mu x) = \frac{1}{1 + e^{-\mu x}}$$

It follows that the input-to-output characteristic of the unit varies due to the variation and convergence of the gain coefficient $\mu(n,i)$, as shown in Fig. 7. As a result, an adequate non-linear function is set up in the individual units at the successive learning stages, so that a high performance neural network which produces a right answer in a high ratio and learns efficiency is achieved. For example, concerning a unit whose output should not be a medium value, the input-to-output characteristic at a comparatively early stage of learning is such that the gain coefficient $\mu$ (n, i) and the gradient of the sigmoid function are small, causing the unit to produce an output pattern which is not clearly separated or converged relative to an input pattern (input value). The input-to-output characteristic of such a unit at a comparatively late stage of learning is such that the gain characteristic $\mu$ (n, i) and the gradient of the sigmoid function are increased, whereby the unit produces a clearly separated and converged output pattern (output value) relative to an input pattern (input value).

How the weights (n, i, j) and the gain coefficient $\mu$ (n, i) are learned when the learning method is implemented by back propagation will be described mathematically.

The input value x (n, i) to the i-th unit of the n-th layer is the sum of the products of the output values Y (n- 1, j) of the individual units of the (n-1)-th layer and the weights W (n, i, j) representative of the intensities of connection of the j-th units of the (n-1)-th layer and the i-th unit of the n-th layer, as stated earlier and as formulated below:

4

$$x(n, i) = \sum_j W(n, i, j) \cdot Y(n-1, j)$$

Assuming that the gain coefficient of the i-th unit (connection) of the n-th layer is $\mu(n, i)$, the input value X (n, i) to the function generator F (X) which is representative of the input-to-output characteristic of the unit is expressed as:

$$X(n, i) = \mu(n, i) \cdot x(n, i)$$

The output value Y (n, i) of the i-th unit is produced by:

$$Y(n, i) = F\{X(n, i)\}$$

In this instance, the difference or error E (k) between the actual output value of the k-th unit of the output layer and the right answer (desired output value) T (k) is defined as:

$$E(k) = \frac{1}{2}\{T(k) - Y(N, k)\}^z$$

In the learning algorithm adopting back propagation, the weights W (n, i, j) and the gain coefficient $\mu(n, i)$ are varied and converged in such a manner as to reduce the difference between the actual output value and the desired output value. Specifically, when the weight coefficients W (n, i, j) are individually varied to reduce the error E (k), a variation $\Delta$W (n, i, j) is given by:

$$\Delta W(n, i, j) = \eta \cdot \sum_k \frac{-\partial E(k)}{\partial W(n, i, j)}$$

$$= \eta \cdot \sum_k \frac{-\partial E(k)}{\partial X(n, i)} \cdot \frac{\partial X(n, i)}{\partial x(n, i)} \cdot \frac{\partial x(n, i)}{\partial W(n, i, j)}$$

$$= \eta \cdot \delta(n, i) \cdot \mu(n, i) \cdot Y(n-1, j)$$

where $\eta$ is a positive constant. In the above equation,

$$\sum_{k} \frac{- \partial E(k)}{\partial X(n,i)} = \delta(n,i)$$

$$\frac{\partial X(n,i)}{\partial x(n,i)} = \mu(n,i)$$

$$\frac{\partial x(n,i)}{\partial W(n,i,j)} = \frac{\partial}{\partial W(n,i,j)} \cdot \sum_{m} W(n,i,m) \cdot Y(n-1,m)$$

$$= Y(n-1,j)$$

When each gain coefficient is $\mu(n,i)$ is varied to reduce the error $E(k)$, a variation $\Delta\mu(n,i)$ is expressed as:

$$\Delta\mu(n,i) = \lambda \cdot \sum_{k} \frac{- \partial E(k)}{\partial \mu(n,i)}$$

$$= \lambda \cdot \sum_{k} \frac{- \partial E(k)}{\partial X(n,i)} \cdot \frac{\partial X(n,i)}{\partial \mu(n,i)}$$

$$= \lambda \cdot \delta(n,i) \cdot x(n,i)$$

where $\lambda$ is a positive constant.
In the above equation, when $n = N$,

$$\delta(N,i) = \sum_{k} \frac{- \partial E(k)}{\partial X(N,i)}$$

$$= \sum_{k} \frac{- \partial E(k)}{\partial Y(N,i)} \cdot \frac{\partial Y(N,i)}{\partial X(N,i)}$$

$$= \sum_{k} \{T(k) - Y(N,k)\} \cdot F' \{X(N,i)\}$$

and when $n < N$,

$$\delta(n, i) = \sum_{k} \frac{-\partial E(k)}{\partial X(n, i)}$$

$$= \sum_{j} \sum_{k} \left\{ \frac{-\partial E(k)}{\partial X(n+1, j)} \cdot \frac{\partial X(n+1, j)}{\partial Y(n, i)} \cdot \frac{\partial Y(n, i)}{\partial X(n, i)} \right\}$$

$$= F'\{X(n, i)\} \cdot \sum_{j} \{\delta(n+1, j) \cdot W(n+1, j, i)\}.$$

Since $\Delta W(n, i, j)$ and $\Delta \mu(n, i)$ both are the variations which cause the error E (k) to reduce, updating the weight coefficients W (n, i, j) and the gain coefficient $\mu$ (n, i) as

$$W(n, i, j) \leftarrow W(n, i, j) + \Delta W(n, i, j)$$

$$\mu(n, i) \leftarrow \mu(n, i) + \Delta \mu(n, i)$$

is successful in constructing a neural network on the basis of learning.

Examples of the illustrative embodiment will be described hereinafter.

Example I

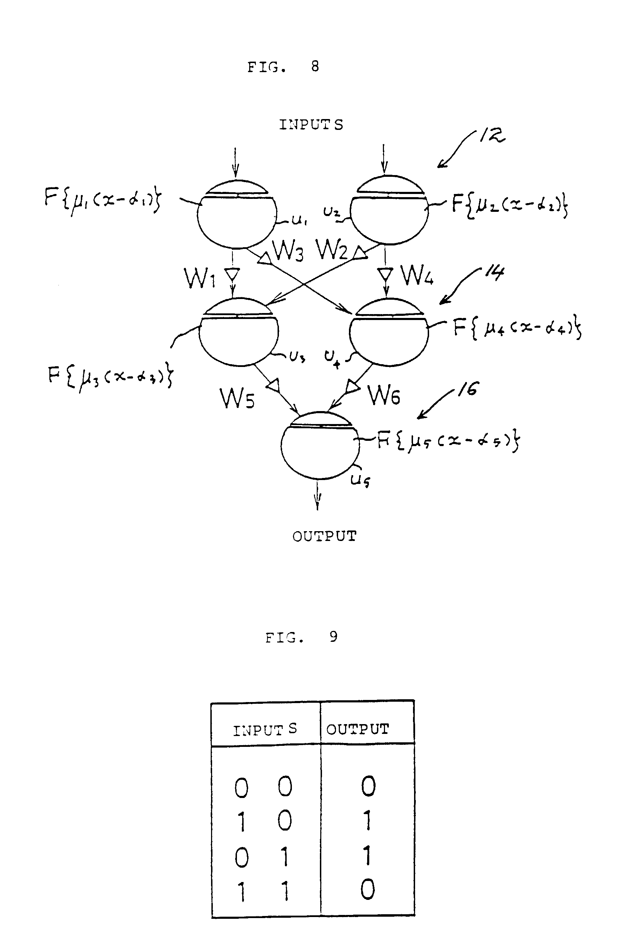

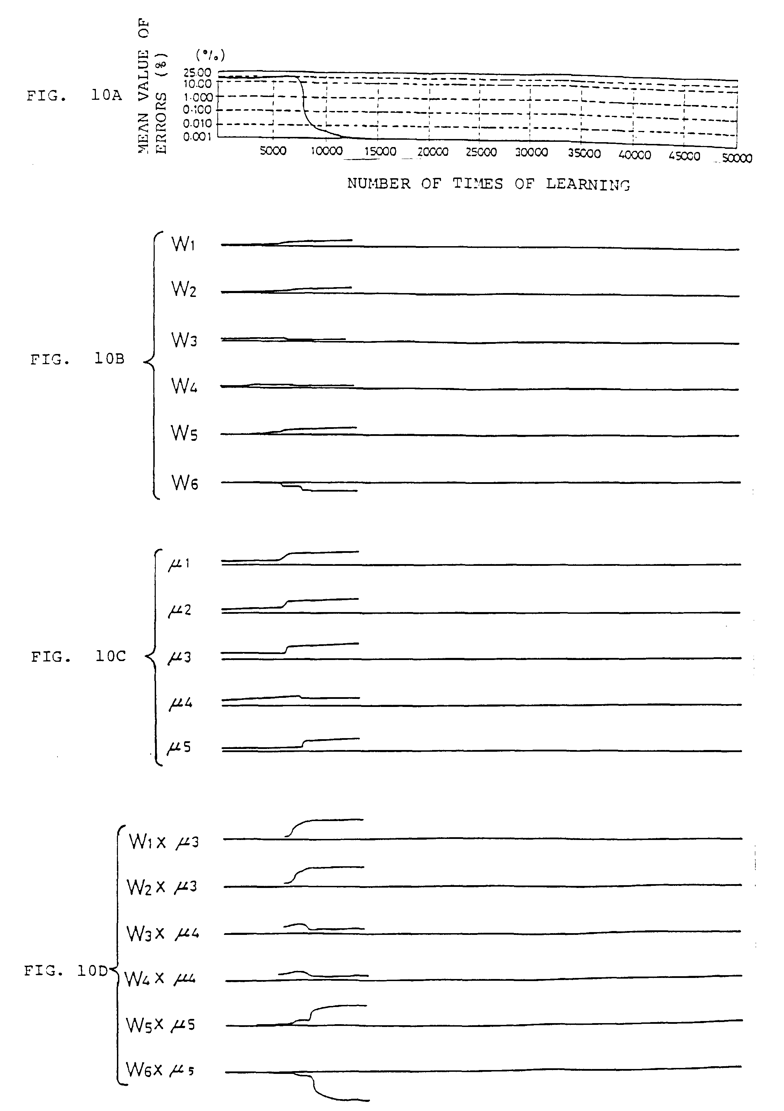

As shown in Fig. 8, Example I is implemented as a neural network made up of an input layer 12 having two units $u_1$ and $u_2$, an intermediate layer 14 having two units $u_3$ and $u_4$, and an output layer 16 having a single unit $u_5$. Fig. 9 lists Exclusive-ORs assigned to such a neural network. The units $\mu_1$ to $u_5$ are connected by weights $W_1$ to $W_6$, as illustrated. The units $u_1$ to $u_5$ have input-to-output characteristics represented by sigmoid functions having gain coefficients $\mu_1$ to $\mu_5$ (also having bias coefficiens $\alpha$ as with the prior art). Learning completes once when the four patterns shown in Fig. 9 are fed randomly once.

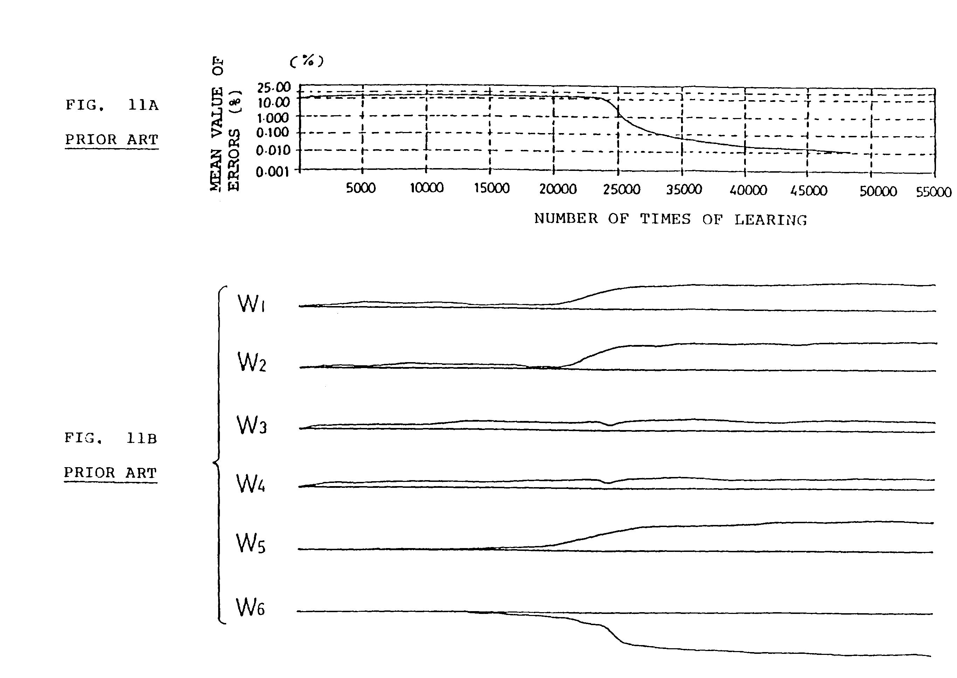

Figs. 10A to 10D are charts demonstrating how the neural network is constructed as the learning proceeds. Specifically, Fig. 10A indicates a relationship between the number of times of learning and the mean value of errors E (k). Figs. 10B and 10C show respectively the variations of the weights $W_1$ to $W_6$ and thevariations of the gain coefficients $\mu_1$ to $\mu_5$. Fig. 10D indicates the variations of the products W·$\mu$ of the weights $W_1$ to $W_6$ and gain coefficients $\mu$. For comparison purpose, Figs. 11A and 11B demonstrate the process in which the prior art neural network lacking the gain coefficients $\mu$ is constructed. Fig. 11A shows a relationship between the number of times of learning and the mean value of errors, while Fig. 11B indicates the variations of weights $W_1$ to $W_6$. As shown in Figs. 11A and 11B, the prior art neural network cannot be constructed without resorting to a great number of times of learning because the weights W each representing the intensity of associated units is changed and converged by being learned little by little. In contrast, as shown in Figs. 10A to 10D, the neural network according to Example I allows the products of the weights W and gains $\mu$ to be varied and converged at an early stage of learning by the gain coefficients $\mu$ which collectively control the individual weights.

Example II

In Example II, the input layer 12, intermediate layer 14 and output layer 16 have sixteen units, eight units and three units, respectively. The neural network having such layers distinguishes Japanese vowels [a] and [o] from each other. The conditions are as follows. Namely, the learning parameter comprises the sixteenth-order LPC cepstrum, twenty patterns are assigned to each of [a] and [o] as learning parameters, the length of analyzing frames is 10 ms, the initial value of each weight W is a random number of -1 to 1, the initial value of each bias coefficient $\alpha$ is 0, the initial value of each gain coefficient $\mu$ is 1, and the right answer is (logical) "1" in the case of [a] or (logical) "0" in the case of [o]. The twenty patterns of [a] and the twenty patterns of [o], i. e. , forty patterns in total are applied at random to the input layer 12 while right answers each being associated with the forty patterns are applied to the output layer 16. This is the single learning. The non-linear function indicative of the input-to-output characteristic of each unit is implemented as the previously stated sigmoid function.

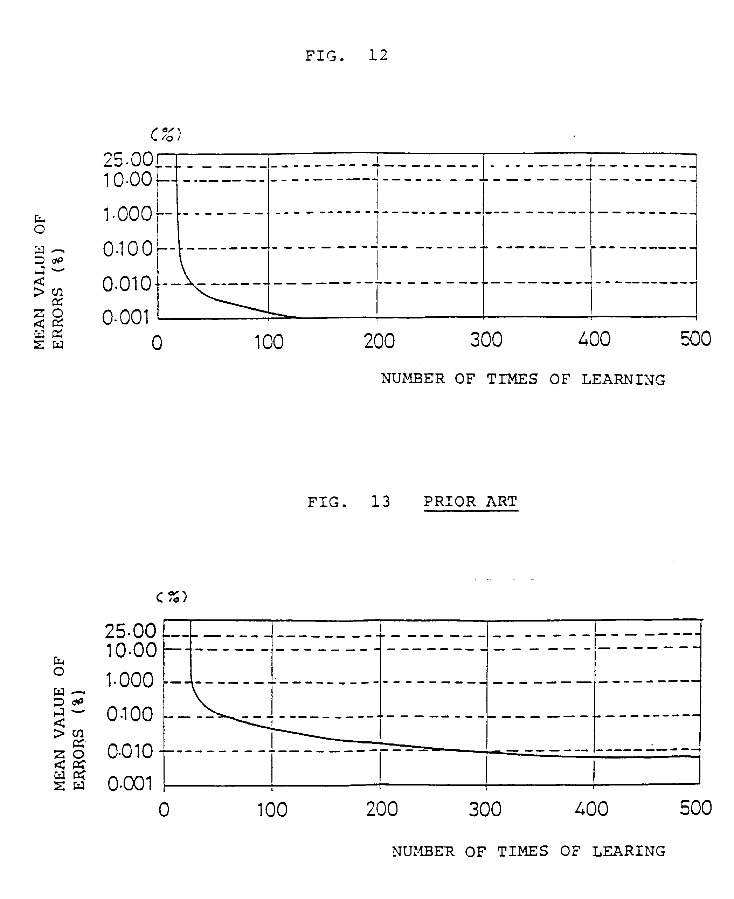

Fig. 12 shows a procedure for constructing the neural network according to Example II and adopting the gain coefficients μ, while Fig. 13 shows a procedure for constructing a prior art neural network which does not use the gain coefficients. Both the network of Example II and the prior art network use the bias coefficients α. In the figures, the abscissa and the ordinate are representative of the number of times of learning and the mean value of errors, respectively. It will be seen that the neural network of Example II which uses gain coefficients achieves higher performance than the prior art by a smaller number of times of learning.

While the illustrative embodiment has been shown and described as having a gain coefficient at the input side of a non-linear function generator for collectively controlling the coefficients of units, the present invention is also practicable with a case where such collective control is executed at the output side or at both of the input side and output sides of the non-linear function generator. The advantage attainable with such alternative control is comparable with or even superior to the advantage of the illustrative embodiment.

## Claims

1.  Neural network comprising a plurality of neuron-units (U), each unit including a transform system implemented by a non-linear function generator (F(x)) which produces an output in response to an input, each neuron-unit further comprising weighting means (W(n,i,p))for individually weighting inputs to that neuron-unit and for individually varying the respective weighting coefficients in response to a back propagation learning algorithm applied to said neural network
    **characterised in that**
    each neuron-unit further comprising gain control means (μ(n,i) connected to said function generator (F(x)) for multiplying at least the input or the output of the function generator by a gain coefficient and for individually varying the gain coefficient in response to said back propagation learning algorithm.

2.  Neural network according to claim 1
    **characterised in that**
    said gain control means are provided at the input side of the non-linear function generator.

3.  Neural network according to claim 1
    **characterised in that**
    said gain control means are provided at the output side of the non-linear function generator.

4.  Neural network according to claim 1
    **characterised in that**
    said gain control means are provided at the input and output side of the non-linear function generator.

## Patentansprüche

1.  Neuronales Netzwerk, das eine Vielzahl von Neuronen-Einheiten (U) umfaßt, wobei jede Einheit ein Transformationssystem enthält, das durch einen nichtlinearen Funktionsgenerator (F(x)) implementiert wird, welcher eine Ausgabe in Antwort auf eine Eingabe erzeugt, wobei jede Neuronen-Einheit weiterhin Gewichtseinrichtungen (W(n,i,p)) zum individuellen Gewichten der Eingaben in diese Neuronen-Einheit und zum individuellen Variieren der entsprechenden Gewichtskoeffizienten in Antwort auf einen an dem neuronalen Netzwerk angewendeten Rückwärtsfortpflanzungs-Lernalgorithmus umfaßt,
    **dadurch gekennzeichnet, daß**
    jede Neuronen-Einheit weiterhin Verstärkungssteuereinrichtungen (μ(n,i)) umfaßt, welche mit dem Funktionsgenerator (F(x)) verbunden sind, um wenigstens die Eingabe oder die Ausgabe des Funktionsgenerators mit einem Verstärkungskoeffizienten zu multiplizieren und um den Verstärkungskoeffizienten individuell in Antwort auf den Rückwärtsfortpflanzungs-Lernalgorithmus zu variieren.

2.  Neuronales Netzwerk nach Anspruch 1
    **dadurch gekennzeichnet, daß**
    die Verstärkungssteuereinrichtungen an der Eingangsseite des nichtlinearen Funktionsgenerators vorgesehen sind.

**3.** Neuronales Netzwerk nach Anspruch 1
**dadurch gekennzeichnet, daß**
die Verstärkungssteuereinrichtungen an der Ausgangsseite des nichtlinearen Funktionsgenerators vorgesehen sind.

**4.** Neuronales Netzwerk nach Anspruch 1
**dadurch gekennzeichnet, daß**
die Verstärkungssteuereinrichtungen an der Eingangsseite und an der Ausgangsseite des nichtlinearen Funktionsgenerators vorgesehen sind.


**Revendications**

**1.** Réseau neuronal comprenant une pluralité d'unités à neurones (U), chaque unité incluant un système de transformation mis en oeuvre par un générateur de fonction non linéaire (F(x)) qui produit un signal de sortie en réponse à un signal d'entrée, chaque unité à neurones comprenant, en outre, des moyens de pondération (W(n, i, p)) destinés à pondérer individuellement les signaux d'entrée à cette unité à neurones et à faire varier individuellement les coefficients de pondération respectifs en réponse à un algorithme d'apprentissage à propagation vers l'arrière appliqué audit réseau neuronal
caractérisé en ce que
chaque unité à neurones comprenant, en outre, des moyens de commande de gain (μ(n, i)) connectés audit générateur de fonction (F(x)) et destinés à multiplier au moins le signal d'entrée ou le signal de sortie du générateur de fonction par un coefficient de gain et à faire varier individuellement le coefficient de gain en réponse audit algorithme d'apprentissage à propagation vers l'arrière.

**2.** Réseau neuronal selon la revendication 1,
caractérisé en ce que
lesdits moyens de commande de gain sont disposés au côté d'entrée du générateur de fonction non linéaire.

**3.** Réseau neuronal selon la revendication 1,
caractérisé en ce que
lesdits moyens de commande de gain sont disposés au côté de sortie du générateur de fonction non linéaire.

**4.** Réseau neuronal selon la revendication 1,
caractérisé en ce que
lesdits moyens de commande de gain sont disposés au côté d'entrée et de sortie du générateur de fonction non linéaire.

FIG. 1 PRIOR ART

INPUTS (INPUT PATTERN) 18

OUTPUTS (OUTPUT PATTERN) 20

FIG. 2 PRIOR ART

INPUTS

OUTPUT

FIG. 3    PRIOR ART

$$F(X) = F(x - \alpha)$$
$$= \frac{1}{1 + \bar{e}^{(x - \alpha)}}$$

OUTPUT F(X)

$\alpha = -2$

$\alpha = -1$

$\alpha = 0$

$\alpha = 1$

$\alpha = 2$

INPUT X

FIG. 4    PRIOR ART

INPUTS              −1

W1    W2    W3        α

A D D

F(X)                 U

OUTPUT

11

FIG. 5

FIG. 6

FIG. 7

$$F(X) = F(\mu x) = \frac{1}{1 + e^{-\mu x}}$$

OUTPUT F(X)

$\mu = 0.3$

$\mu = 0.5$

$\mu = 1.0$ $\mu = 2.0$ $\mu = 6.0$

INPUT X

FIG. 8

FIG. 9

FIG. 10A

MEAN VALUE OF ERRORS (%)

(%)
25.00
10.00
1.000
0.100
0.010
0.001

5000  10000  15000  20000  25000  30000  35000  40000  45000  50000

NUMBER OF TIMES OF LEARNING

FIG. 10B

W₁

W₂

W₃

W₄

W₅

W₆

FIG. 10C

$\mu_1$

$\mu_2$

$\mu_3$

$\mu_4$

$\mu_5$

FIG. 10D

$W_1 \times \mu_3$

$W_2 \times \mu_3$

$W_3 \times \mu_4$

$W_4 \times \mu_4$

$W_5 \times \mu_5$

$W_6 \times \mu_5$

15

FIG. 11A

PRIOR ART

FIG. 11B

PRIOR ART

FIG. 12

(%)

FIG. 13    PRIOR ART

(%)